# EUROPEAN PATENT SPECIFICATION

(11) **EP 4 552 927 B1**
(45) Date of publication and mention of the grant of the patent: **29.04.2026**
(21) Application number: 24207549.7
(22) Date of filing: 18.10.2024
(51) Int. Cl.: B60R 9/06

(54) **REAR-MOUNTED BICYCLE RACK, SKI RACK, BAGGAGE RACK, BAGGAGE CARRIER FOR MOTOR VEHICLE**
HECKMONTIERTES FAHRRADGESTELL, SKIGESTELL, GEPÄCKGESTELL, GEPÄCKTRÄGER FÜR KRAFTFAHRZEUG
PORTE-BICYCLETTES, PORTE-BICYCLETTES, PORTE-BAGAGES, PORTE-BAGAGES POUR VÉHICULE AUTOMOBILE, MONTÉ À L'ARRIÈRE

(30) Priority: 08.11.2023 IT 202300023448
(43) Date of publication of application: 14.05.2025
(73) Proprietor: Peruzzo, Martina, 36060 Romano d'Ezzelino (VI) (IT)
(72) Inventor: FIORESE, Michele, 36061 BASSANO DEL GRAPPA VI (IT)
(74) Representative: Modiano, Micaela Nadia

(56) References cited:
- EP-B1- 0 883 519
- EP-B1- 3 915 841
- WO-A1-2023/201085
- US-A1- 2014 291 370

## Description

The present invention relates to a rear-mounted bicycle rack, ski rack, baggage rack, baggage carrier for a motor vehicle.

Nowadays, apparatuses of the type of a rear-mounted bicycle rack, ski rack, baggage rack, baggage carrier for motor vehicles are widespread, and have a structure with a cantilevered base in the configuration for use, which is fixed to the tow hook by way of adapted fastening means.

The rack/carrier has a frame on which slots are then associated which are adapted to accommodate bicycles and, or bars and elements for holding skis or snowboards and, or bars and fixing elements for baggage.

Such conventional apparatuses have the drawback of not allowing the door of the baggage compartment (the rear door) of the motor vehicle to be opened, once it is installed and loaded.

In order to overcome this drawback, types of bicycle rack, ski rack, baggage rack, baggage carrier are known which have a variable-configuration base.

Among the conventional types of bicycle rack, ski rack, baggage rack, baggage carrier, nowadays on the market there are two types of variable-configuration base:
- the base with a frame that slides horizontally,
- the base with a frame that is at least partially tiltable.

The base with a horizontally sliding frame has a structure provided with translation means which comprise at least one horizontal guide on which the frame can translate horizontally.

This type of base is mainly used on motor vehicles that have one or two rear doors, which are opened by rotating about a vertical axis such as, for example, in a van.

The base with an at least partially tiltable frame has a structure provided with one or two arms which extend horizontally in the configuration for use, at the ends of which the frame is hinged. The frame is arranged on a plane parallel to the arms during the movement of the motor vehicle, and is rotatable about a horizontal axis which is coplanar with the plane of arrangement of the arms.

This type of base is used mainly on motor vehicles that have one rear door which is opened by rotating about a horizontal axis, such as, for example, in an automobile.

These conventional techniques also have a number of drawbacks.

In fact, neither of the two types of bases described above is universal, even though it allows the door of some specific types of motor vehicles to be opened.

This means that the consumer who owns two types of motor vehicle, for example an automobile and a van, has to buy two different types of apparatus.

Similarly, a consumer who changes their motor vehicle for another of a different type may find it necessary to buy a new type of rear-mounted bicycle rack, ski rack, baggage rack, baggage carrier so that they will be able to open the rear door.

Furthermore, the presence on the market of such two different types of base obliges the retainers to allocate considerable storage space to stock them.

The aim of the present invention is to provide a rear-mounted bicycle rack, ski rack, baggage rack, baggage carrier for a motor vehicle which is capable of improving the known art in one or more of the above-mentioned aspects.

Within this aim, an object of the invention is to provide a rear-mounted bicycle rack, ski rack, baggage rack, baggage carrier for a motor vehicle that is universal and can be installed on any type of motor vehicle while still allowing the rear door to be opened, whether it opens by rotation about a vertical axis, or it opens by rotation about a horizontal axis.

Another object of the invention is to provide a base for a rear-mounted bicycle rack, ski rack, baggage rack, baggage carrier for a motor vehicle that allows retailers to reduce the storage space necessary to stock rear-mounted bicycle rack, ski rack, baggage rack, baggage carrier apparatuses for a motor vehicle.

Furthermore, the present invention sets out to overcome the drawbacks of the background art in a manner that is alternative to any existing solutions. EP3915841B1 discloses a bicycle rack according to the preamble of claim 1.

Another object of the invention is to provide a rear-mounted bicycle rack, ski rack, baggage rack, baggage carrier for a motor vehicle as defined by claim 1.

Further characteristics and advantages of the invention will become better apparent from the detailed description that follows of a preferred, but not exclusive, embodiment of the rear-mounted bicycle rack, ski rack, baggage rack, baggage carrier for a motor vehicle according to the invention, which is illustrated for the purposes of non-limiting example in the accompanying drawings wherein:
- Figure 1 is an overall perspective view of a rear-mounted bicycle rack for a motor vehicle according to the invention, in the configuration for use;
- Figures 2 to 4 are side views of the bicycle rack of Figure 1 in three different configurations for use;
- Figures 5 to 7 are perspective views of the rear-mounted bicycle rack, ski rack, baggage rack, baggage carrier for a motor vehicle, according to the invention, in three configurations for use, each one corresponding to a respective configuration of the bicycle rack shown in Figures 2 to 4;
- Figure 8 is an overall perspective view of a rear-mounted baggage rack for a motor vehicle according to the invention, in the configuration for use.

With reference to the figures, a rear-mounted bicycle rack, ski rack, baggage rack, baggage carrier for a motor vehicle, according to the invention, is generally designated by the reference numeral 10.

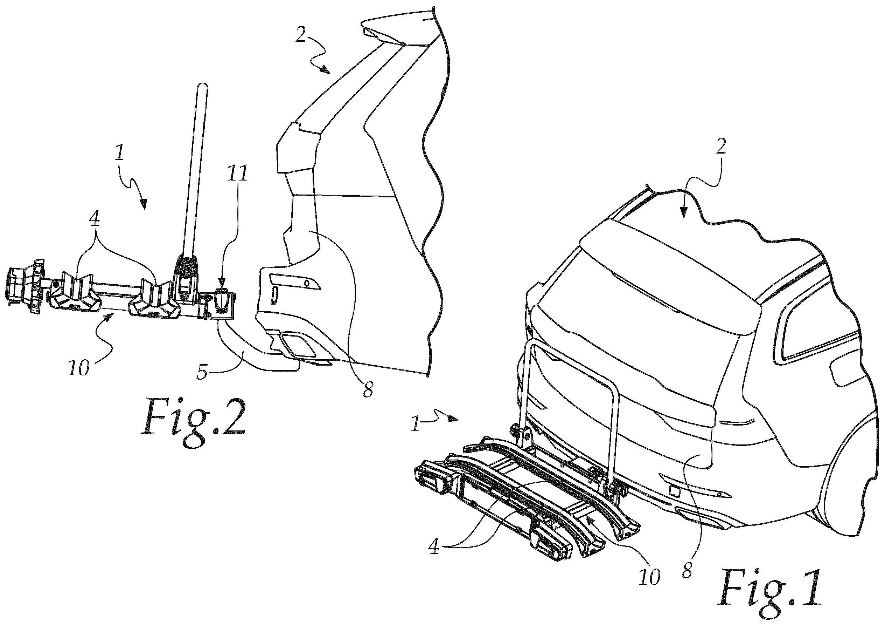

In Figures 1 to 4, the base 10 is used in a rear-mounted bicycle rack 1 for a motor vehicle 2.

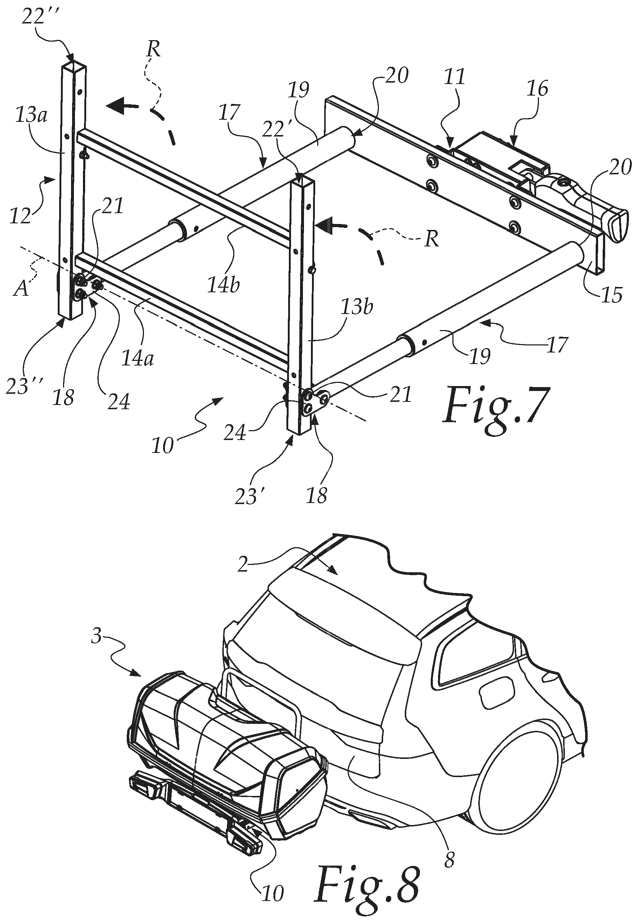

However, the base 10, can also be used in other types of apparatus, such as for example:
- a rear-mounted baggage rack 3 for a motor vehicle 2, shown in Figure 8, or the like,
- a ski rack, not shown in the figures.

The base 10 comprises:
- a portion 11 for association with the tow hook 5 of the motor vehicle 2,
- a frame 12.

The frame 12 is arranged on a plane that is substantially horizontal in the configuration for movement of the motor vehicle 2.

The frame 12 is adapted to fix and support:
- slots 4 for accommodating bicycles, for the bicycle rack 1,
- and, or bars and elements for holding skis or snowboards and, or bars and elements for fixing a trunk and baggage carrier, not shown in the figures.

The frame 12 is constituted by:
- two first bars 13a, 13b, parallel,
- two second bars 14a, 14b, parallel, each one extending between the two first bars 13a, 13b, at right angles thereto.

Advantageously, the first bars 13a, 13b and the second bars 14a, 14b are monolithic.

The portion 11 for association with the tow hook 5 of the motor vehicle 2 has:
- a third bar 15,
- means 16 for fixing and fastening to the tow hook 5, which extend from the third bar 15.

The means 16 for fixing and fastening to the tow hook 5 extend from a first side of the third bar 15 and are of a type that is per se known, for example of the type comprising a lever mechanism (not shown in the figures) for closing and opening a pair of jaws around the ball of the tow hook 5 (also not shown in the figures).

One of the peculiarities of the invention consists in that the base 10 comprises:
- means 17 for the horizontal translation of the frame 12,
- and means 18 for the rotation of the frame 12 about a substantially horizontal axis A.

In particular, the means 17 for the horizontal translation of the frame 12 comprise at least one telescopic arm 19, which is substantially horizontal in the configuration for use.

The means 17 for the horizontal translation of the frame 12 comprise two telescopic arms 19, each one of which extends from a second side of the third bar 15, opposite to its first side, from which the means 16 extend for fixing and fastening to the tow hook 5.

The frame 12 is arranged, in the configuration for use and movement of the motor vehicle 2, on a plane that is substantially horizontal and parallel to the plane of arrangement of the two arms 19.

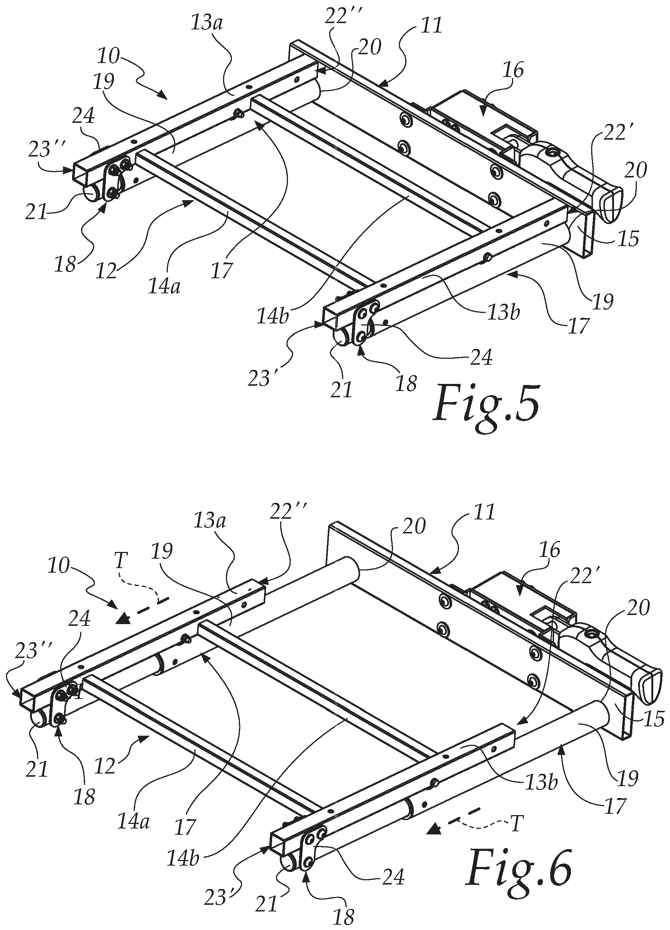

In the present description, the expression "configuration for use and movement of the motor vehicle" means the configuration that the base assumes during the normal movement of the motor vehicle, shown in particular in Figures 2 and 5.

The telescopic arms 19 have:
- a first end 20, associated with the third bar 15,
- a second end 21, coupled to a respective first bar 13a, 13b of the frame 12.

The first bars 13a, 13b each have:
- a first end 22', 22", directed toward the third bar 15, in the configuration for use and for movement of the motor vehicle 2,
- a second end 23', 23", opposite to the preceding one.

The means 18 for the rotation of the frame 12 comprise one or more hinge elements 24, each one for a respective arm 19.

In particular, each hinge element 24 is associated with and mutually couples:
- the second end 21 of a respective arm 19,
- the second end 23', 23" of a respective first bar 13a, 13b.

The base 10 also has:
- means for preventing the rotation of the frame 12 about the axis A, not shown in the figures, in order to prevent the rotation of the frame during the movement of the motor vehicle 2, for example constituted by abutment elements defining seats that are shaped to match the first ends 22', 22" of the first bars 14a, 14b, when the base 10 is in the configuration for use and for movement of the motor vehicle 2,
- means for preventing the horizontal translation of the frame 12, also not shown in the figures, for example comprising snap-acting elements which interact with the first ends 22', 22" of the first bars 14a, 14b when the base 10 is in the configuration for use and movement of the motor vehicle 2, and which can be disengaged by means of a special lever and/or handle in order to allow the translation of the frame 12.

The use of the base 10 is the following,

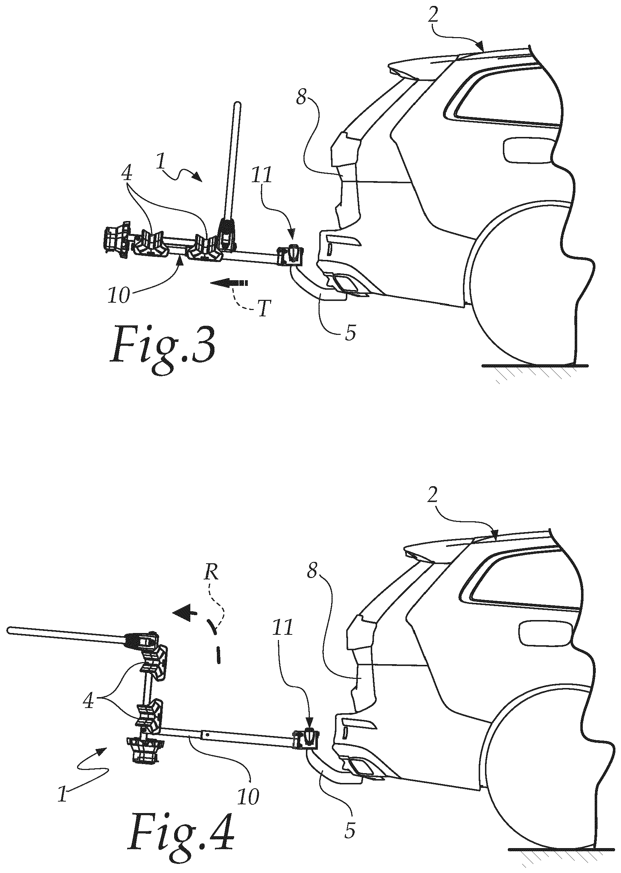

When it is necessary to open the door 8 of the motor vehicle 2, the frame 12 is slid horizontally using the arms 19, along the direction indicated by the arrows T in Figures 3 and 6, then it is rotated about the axis A, along the direction indicated by the arrows R in Figures 4 and 7, using the hinge elements 24.

In this manner, the base 10 enables the rear-mounted bicycle rack, ski rack, baggage rack, baggage carrier for a motor vehicle to allow the rear door to be opened:
- whether the door is of the type that opens by rotating about a vertical axis,
- or the door is of the type that opens by rotating about a horizontal axis.

In practice it has been found that the invention fully achieves the intended aim and objects by providing a rear-mounted bicycle rack, ski rack, baggage rack, baggage carrier for a motor vehicle, which can be installed on any type of motor vehicle while still allowing the rear door to be opened, whether it opens by rotation about a vertical axis, or it opens by rotation about a horizontal axis.

With the invention a rear-mounted bicycle rack, ski rack, baggage rack, baggage carrier for a motor vehicle has been provided that allows retailers to reduce the storage space necessary to stock rear-mounted bicycle rack, ski rack, baggage rack, baggage carrier apparatuses for a motor vehicle.

In practice the materials employed, provided they are compatible with the specific use, and the contingent dimensions and shapes, may be any according to requirements and to the state of the art.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. A rear-mounted bicycle rack, ski rack, baggage rack, baggage carrier (1, 3) for a motor vehicle (2), comprising a base, said base (10) comprising:
- a portion (11) for association with a tow hook (5) of said motor vehicle (2),
- a frame (12),
- means (17) for the horizontal translation of said frame (12), and
- means (18) for the rotation of said frame (12) about a substantially horizontal axis (A)
**characterized in that** said frame (12) is constituted by:
- two first parallel bars (13a, 13b), and
- two second parallel bars (14a, 14b), each one extending between said two first parallel bars (13a, 13b), at right angles thereto,
wherein said means (17) for the horizontal translation of said frame (12) comprise at least one telescopic arm (19), which is substantially horizontal in the configuration for use.

2. The rack, carrier (1, 3) according to claim 1, **characterized in that** said portion (11) for association with said tow hook (5) of said motor vehicle (2) has:
- a third bar (15),
- means (16) for fixing and fastening to said tow hook (5), which extend from a first side of said third bar (15).

3. The rack, carrier (1, 3) according to claim 2, **characterized in that** said means (17) for the horizontal translation of said frame (12) comprise two telescopic arms (19), each one extending from a second side of said third bar (15), opposite to said first side of said third bar (15).

4. The rack, carrier (1, 3) according to one or more of the preceding claims, **characterized in that** said frame (12) is arranged, in the configuration for use and movement of said motor vehicle (2), on a plane that is substantially horizontal and parallel to the plane of arrangement of said two arms (19).

5. The rack, carrier (1, 3) according to one or more of the preceding claims, **characterized in that** said telescopic arms (19) have:
- a first end (20), associated with said third bar (15),
- a second end (21), coupled to a respective one of said first bars (13a, 13b) of said frame (12).

6. The rack, carrier (1, 3) according to one or more of the preceding claims, **characterized in that** said first bars (13a, 13b) each have:
- a first end (22', 22"), directed toward said third bar (15), in the configuration for use and for movement of said motor vehicle (2),
- a second end (23', 23"), opposite to the preceding one.

7. The rack, carrier (1, 3) according to one or more of the preceding claims, **characterized in that** said means (18) for the rotation of said frame (12) comprise one or more hinge elements (24), each for a respective one of said arms (19).

8. The rack, carrier (1, 3) according to one or more of the preceding claims, **characterized in that** each one of said one or more hinge elements (24) is associated with and mutually couples:
- said second end (21) of a respective one of said arms (19),
- said second end (23', 23") of a respective one of said first bars (13a, 13b).

## Patentansprüche

1. Ein heckmontiertes Fahrradgestell, Skigestell, Gepäckgestell, Gepäckträger (1, 3) für ein Kraftfahrzeug (2), das eine Basis umfasst, wobei die Basis (10) Folgendes umfasst:
- einen Teil (11) zur Verbindung mit einem Zughaken (5) des Kraftfahrzeugs (2),
- einen Rahmen (12),
- Mittel (17) zur horizontalen Translation des Rahmens (12) und
- Mittel (18) zur Rotation des Rahmens (12) um eine im Wesentlichen horizontale Achse (A), **dadurch gekennzeichnet, dass** der Rahmen (12) aus Folgendem besteht:
- zwei ersten parallelen Stangen (13a, 13b) und
- zwei zweiten parallelen Stangen (14a, 14b), die sich jeweils zwischen den zwei ersten parallelen Stangen (13a, 13b) in rechten Winkeln dazu erstrecken; wobei die Mittel (17) zur horizontalen Translation des Rahmens (12) mindestens einen Teleskoparm (19) umfassen, der in der Nutzungskonfiguration im Wesentlichen horizontal ist.

2. Das Gestell, der Träger (1, 3) gemäß Anspruch 1, **dadurch gekennzeichnet, dass** der Teil (11) zur Verbindung mit dem Zughaken (5) des Kraftfahrzeugs (2) Folgendes hat:
- eine dritte Stange (15),
- Mittel (16) zur Fixierung und Befestigung an dem Zughaken (5), die sich von einer ersten Seite der dritten Stange (15) erstrecken.

3. Das Gestell, der Träger (1, 3) gemäß Anspruch 2, **dadurch gekennzeichnet, dass** die Mittel (17) zur horizontalen Translation des Rahmens (12) zwei Teleskoparme (19) umfassen, die sich jeweils von einer zweiten Seite der dritten Stange (15), gegenüber der ersten Seite der dritten Stange (15), erstrecken.

4. Das Gestell, der Träger (1, 3) gemäß einem oder mehreren der obigen Ansprüche, **dadurch gekennzeichnet, dass** der Rahmen (12) in der Konfiguration zur Nutzung und Bewegung des Kraftfahrzeugs (2) auf einer Ebene angeordnet ist, die im Wesentlichen horizontal und parallel zur Anordnungsebene der zwei Arme (19) ist.

5. Das Gestell, der Träger (1, 3) gemäß einem oder mehreren der obigen Ansprüche, **dadurch gekennzeichnet, dass** die Teleskoparme (19) Folgendes haben:
- ein erstes Ende (20), verbunden mit der dritten Stange (15),
- ein zweites Ende (21), gekoppelt mit einer jeweiligen der ersten Stangen (13, 13b) des Rahmens (12).

6. Das Gestell, der Träger (1, 3) gemäß einem oder mehreren der obigen Ansprüche, **dadurch gekennzeichnet, dass** die ersten Stangen (13a, 13b) jeweils Folgendes haben:
- ein erstes Ende (22', 22"), in der Konfiguration zur Nutzung und Bewegung des Kraftfahrzeugs (2) der dritten Stange (15) zugewandt,
- ein zweites Ende (23', 23") gegenüber dem ersten.

7. Das Gestell, der Träger (1, 3) gemäß einem oder mehreren der obigen Ansprüche, **dadurch gekennzeichnet, dass** die Mittel (18) zur Rotation des Rahmens (12) ein oder mehrere Scharnierelemente (24), jeweils für einen entsprechenden der Arme (19), umfassen.

8. Das Gestell, der Träger (1, 3) gemäß einem oder mehreren
der obigen Ansprüche,
**dadurch gekennzeichnet, dass** jedes der einen oder mehreren Scharnierelemente (24) mit Folgenden verbunden ist und sie miteinander koppelt:
- das zweite Ende (21) eines jeweiligen der Arme (19),
- das zweite Ende (23', 23") einer jeweiligen der ersten Stangen (13a, 13b).

## Revendications

1. Porte-bicyclettes, porte-skis, porte-bagages (1, 3) pour un véhicule automobile (2), monté à l'arrière, comprenant une base, ladite base (10) comprenant :
- une partie (11) destinée à être associée à un crochet d'attelage (5) dudit véhicule automobile (2),
- un châssis (12),
- des moyens (17) pour la translation horizontale dudit châssis (12), et
- des moyens (18) pour la rotation dudit châssis (12) autour d'un axe sensiblement horizontal (A),
**caractérisé en ce que** ledit châssis (12) est constitué par :
- deux premières barres parallèles (13a, 13b), et
- deux secondes barres parallèles (14a, 14b), chacune s'étendant entre lesdites deux premières barres parallèles (13a, 13b), à angle droit par rapport à celles-ci,
où lesdits moyens (17) pour la translation horizontale dudit châssis (12) comprennent au moins un bras télescopique (19), qui est sensiblement horizontal dans la configuration d'utilisation.

2. Le porte-bagages (1, 3) selon la revendication 1, **caractérisé en ce que** ladite partie (11) destinée à être associée audit crochet d'attelage (5) dudit véhicule automobile (2) comporte :
- une troisième barre (15),
- des moyens (16) de fixation et d'attache audit crochet d'attelage (5), qui s'étendent à partir d'un premier côté de ladite troisième barre (15).

3. Le porte-bagages (1, 3) selon la revendication 2, **caractérisé en ce que** lesdits moyens (17) pour la translation horizontale dudit châssis (12) comprennent deux bras télescopiques (19), chacun s'étendant à partir d'un deuxième côté de ladite troisième barre (15), opposé audit premier côté de ladite troisième barre (15).

4. Le porte-bagages (1, 3) selon une ou plusieurs des revendications précédentes, **caractérisé en ce que** ledit châssis (12) est disposé, dans la configuration d'utilisation et de déplacement dudit véhicule automobile (2), sur un plan qui est sensiblement horizontal et parallèle au plan de disposition desdits deux bras (19).

5. Le porte-bagages (1, 3) selon une ou plusieurs des revendications précédentes, **caractérisé en ce que** lesdits bras télescopiques (19) comportent :
- une première extrémité (20), associée à ladite troisième barre (15),
- une deuxième extrémité (21), couplée à l'une respective desdites premières barres (13a, 13b) dudit châssis (12).

6. Le porte-bagages (1, 3) selon une ou plusieurs des revendications précédentes,
**caractérisé en ce que** lesdites premières barres (13a, 13b) comportent chacune :
- une première extrémité (22', 22"), dirigée vers ladite troisième barre (15), dans la configuration d'utilisation et de déplacement dudit véhicule automobile (2),
- une deuxième extrémité (23', 23"), opposée à la précédente.

7. Le porte-bagages (1, 3) selon une ou plusieurs des revendications précédentes, **caractérisé en ce que** lesdits moyens (18) pour la rotation dudit châssis (12) comprennent un ou plusieurs éléments d'articulation (24), chacun pour l'un respectif desdits bras (19).

8. Le porte-bagages (1, 3) selon une ou plusieurs des revendications précédentes, **caractérisé en ce que** chacun desdits un ou plusieurs éléments d'articulation (24) est associé à et couple mutuellement :
- ladite deuxième extrémité (21) d'un bras respectif parmi lesdits bras (19),
- ladite deuxième extrémité (23', 23") d'une première barre respective parmi lesdites premières barres (13a, 13b).
